# FASCICULE DE BREVET EUROPEEN

(11) **EP 2 995 479 B1**
(45) Date de publication et mention de la délivrance du brevet: **27.06.2018**
(21) Numéro de dépôt: 15182212.9
(22) Date de dépôt: 24.08.2015
(51) Int. Cl.: B60C 27/10, B60C 27/06

(54) **DISPOSITIF ANTIDERAPANT POUR ROUE DE VEHICULE AUTOMOBILE**
RUTSCHFESTE VORRICHTUNG FÜR KRAFTFAHRZEUGREIFEN
ANTI-SLIP DEVICE FOR A MOTOR VEHICLE WHEEL

(30) Priorité: 15.09.2014 FR 1458660
(43) Date de publication de la demande: 16.03.2016
(73) Titulaire: Joubert Productions, 63600 Ambert (FR)
(72) Inventeur: JOUBERT, Xavier, 63600 Ambert (FR); JOUBERT, Thierry, 63600 Ambert (FR); KAELIN, Régis, 63600 Saint Ferréol des Côtes (FR); PAILLARD, Thomas, 63670 Orcet (FR)
(74) Mandataire: Cabinet Laurent & Charras

(56) Documents cités:
- EP-A1- 2 050 591
- EP-A1- 2 206 615
- WO-A1-03/011618
- DE-C1- 4 018 415

## Description

### DOMAINE TECHNIQUE

L'invention se rapporte au domaine des dispositifs antidérapants pour pneumatiques de roues de véhicules automobiles.

De tels dispositifs se présentent généralement sous la forme d'un chemin de roulement comportant une pluralité de patins ou systèmes équivalents, présentant des propriétés antidérapantes, lesdits patins étant rapportés et maintenus en position sur la bande de roulement d'un pneumatique. Ces dispositifs antidérapants sont ainsi utilisés sur des roues de véhicules en cas de présence de neige ou de glace sur la chaussée.

L'invention vise plus particulièrement un dispositif antidérapant de type frontal, c'est-à-dire fixé sur la surface visible de la jante d'une roue de véhicule automobile. Ce dispositif comporte des bras radiaux solidarisés à un organe central, lui-même solidarisé à la jante de la roue. Cet organe central est destiné à transmettre aux bras radiaux une force de plaquage contre le flanc externe du pneumatique, induisant corollairement le maintien du chemin de roulement situé à leur extrémité sur la bande de roulement du pneumatique concerné. Un tel couple permet de solliciter en flexion les bras radiaux et à plaquer le chemin de roulement contre la bande de roulement du pneumatique considéré.

### ETAT ANTERIEUR DE LA TECHNIQUE

Il est bien connu que tout dispositif antidérapant monté sur un pneumatique entre en rotation par adhérence avec le pneumatique, concomitamment avec la rotation dudit pneumatique. De la même manière, on sait qu'en fonctionnement, la vitesse de rotation du dispositif antidérapant est inférieure à celle du pneumatique qui le met en mouvement, ce différentiel de vitesse pouvant atteindre quelques tours de roue par kilomètre.

Ce différentiel de vitesse a différentes causes, et notamment :
- les phénomènes de glissement du pneumatique au sein du dispositif antidérapant, tout particulièrement lors des phases de démarrage, de freinage, de patinage et de ripage,
- une différence de périmètre alors même que la vitesse tangentielle est identique lors des faibles vitesses de progression du véhicule,
- une différence de périmètre plus importante inhérente à la déformation du dispositif antidérapant sous l'effet de la force centrifuge à plus grande vitesse de progression du véhicule.

Si ces phénomènes ont peu d'influence sur les dispositifs antidérapants traditionnels de type chaîne, chaussette textile, filet, dans la mesure où ces derniers n'ont pas de liaison fixe avec la roue sur laquelle ils sont montés, en revanche, tel n'est pas le cas des dispositifs antidérapants du type frontal.

Ces dispositifs ont en effet été développés pour répondre à la problématique de l'accessibilité de plus en plus réduite au flanc arrière ou interne du pneumatique, en raison de la réduction des passages de roue et de l'augmentation des largeurs de pneumatiques.

De fait, ces dispositifs antidérapants frontaux ont entendu répondre à ces difficultés. A cet effet, il comporte, de manière connue, des bras radiaux, reliés à des guides, ces derniers faisant partie intégrante du chemin de roulement des dispositifs. Ces guides ont vocation à maintenir le chemin de roulement sur la bande de roulement du pneumatique considéré.

Afin d'assurer le rôle de maintien du chemin de roulement au contact avec la bande de roulement du pneumatique, les bras radiaux doivent être maintenus en pression contre le flanc extérieur du pneumatique. A cet effet, les bras sont reliés à un point fixe solidaire de la jante, et généralement de l'un ou de plusieurs des goujons de fixation de la roue sur la jante.

Ce faisant, on se heurte à un problème né de la gestion de la vitesse relative entre la roue et le dispositif antidérapant et de la discontinuité de la vitesse relative sur la largeur du pneumatique qui, en l'absence de la résolution de ce problème, conduisent à la casse du dispositif antidérapant.

La gestion de la vitesse relative entre la roue et le dispositif antidérapant implique la mise en oeuvre d'une liaison pivot entre le point fixe et la partie tournante du dispositif antidérapant.

La discontinuité de la vitesse relative sur la largeur du pneumatique génère une déformation du chemin de roulement, qui tend à « dévisser » le dispositif antidérapant hors du pneumatique, engendrant une force opposée à la force de plaquage générée par les bras radiaux sur le flanc externe du pneumatique.

Afin de résoudre ces difficultés, diverses solutions ont été proposées. De manière générale, elles consistent à adapter le positionnement du point fixe au niveau duquel sont solidarisés les bras radiaux, au niveau le plus proche possible de l'axe de rotation de la roue. A cet effet, ces solutions proposent des moyens de réglage de la profondeur du point fixe par rapport à la roue, outre des moyens assurant le centrage de ce point fixe.

Cependant, ces solutions, outre qu'elles s'avèrent d'un coût élevé en raison du nombre important d'éléments qu'elles nécessitent, sont particulièrement peu pratiques à mettre en oeuvre. En effet, elles nécessitent le plus souvent de faire appel à un jeu de douilles ou de bagues, pour régler la profondeur du puits de jante, outre des systèmes complexes à utiliser pour le centrage. Cette complexité est en outre exacerbée, puisque les conditions de mise en place de ce dispositif antidérapant ne sont généralement pas idoines, l'expérience démontrant que c'est lorsqu'il est en difficulté en termes d'adhérence que l'utilisateur se décide à faire appel à de tels dispositifs antidérapants. Le document EP 2 050 591 décrit un dispositif de ce type.

L'objectif recherché par la présente invention réside principalement dans la simplification de la mise en place de tels dispositifs antidérapants de type frontal, tout en garantissant l'application d'une force de plaquage efficace transmise par les bras radiaux au chemin de roulement.

### EXPOSE DE L'INVENTION

L'invention vise donc un dispositif antidérapant pour roue de véhicule automobile comprenant :
- un chemin de roulement comportant une pluralité de moyens développant des propriétés antidérapantes reliés entre eux au moyen d'éléments de jonction ;
- des bras radiaux permettant de maintenir ledit chemin de roulement sur la bande de roulement d'un pneumatique d'une roue de véhicule ;
- un flasque central avec lequel coopèrent lesdits bras radiaux, comprenant une face interne, dirigée en direction de la jante, et une face opposée, dite face externe ;
- des moyens mécaniques aptes à transmettre une force de plaquage auxdits bras radiaux, lesdits moyens mécaniques comportant un organe fixe solidaire de la jante sur laquelle est fixée la roue considérée, et un organe de traction flexible permettant de déplacer axialement ledit flasque central par rapport à la jante du véhicule, le déplacement axial dudit flasque central permettant de générer une force de plaquage des bras sur le flanc externe du pneumatique ;
- ledit organe de traction flexible étant solidarisé au niveau de l'une de ses extrémités à l'organe fixe, et à son autre extrémité au flasque central, et étant actionné au moyen d'un levier de mise sous tension, articulé sur la face externe du flasque central.

Selon l'invention,
- l'organe de traction flexible traverse le flasque central de sa face interne à sa face externe au niveau d'un canal ménagé au centre dudit flasque,
- la longueur utile de l'organe de traction flexible séparant l'organe fixe et son point de fixation au flasque central est constante, que le dispositif antidérapant soit mis en place ou non sur la roue considérée,
- et le levier articulé est muni d'un renvoi autour duquel passe l'organe de traction flexible après traversée du flasque par ledit canal.

En d'autres termes, l'invention consiste tout d'abord à s'affranchir des moyens connus de réglage du positionnement du flasque central en fonction de la profondeur du puits de jante, ce au moyen de l'organe de traction flexible, typiquement constitué d'un cordon, d'une tresse, ou tout système analogue, coopérant avec le flasque et le levier dont ce dernier est muni. La simple application d'une pression/rotation sur ledit levier, permet d'assurer le positionnement correct du flasque central, et corollairement d'assurer le plaquage des bras radiaux contre le flanc externe du pneumatique, et par voie de conséquence, le positionnement du chemin de roulement sur la bande de roulement du pneumatique considéré.

Par ailleurs, le système de positionnement du flasque central par rapport à la roue considérée est de conception simple, ledit flasque étant exempt de tout élément de renvoi de l'organe de traction flexible, à l'exception de celui intégré dans le levier de mise sous tension

Selon une caractéristique avantageuse de l'invention, le dispositif antidérapant comprend des moyens de réglage de la longueur utile de l'organe de traction flexible, lesdits moyens étant intégrés au sein du flasque central, la fixation dudit organe de traction flexible au flasque intervenant au niveau de ces moyens de réglage.

Ce faisant, les difficultés nées du réglage d'un tel dispositif antidérapant sont surmontées par l'intégration au sein-même du flasque central de tels moyens de réglage de la longueur utile dudit organe de traction flexible, lesdits moyens de réglage étant actionnables de manière relativement simple par l'utilisateur lors de la première adaptation du dispositif antidérapant sur l'une des roues de son véhicule.

Selon une caractéristique de l'invention, ces moyens de réglage de la longueur utile de l'organe de traction flexible sont constitués :
- d'un chariot mobile en translation et reçu dans des glissières intégrées au sein du flasque central, l'extrémité de l'organe de traction flexible opposée à celle solidarisée à l'organe fixe solidaire de la jante étant fixée sur ledit chariot ;
- d'une molette ou écrou faisant saillie sur la face externe du flasque central, coopérant avec une tige filetée solidaire dudit chariot.

Selon une autre caractéristique de l'invention, le dispositif intègre un moyen de stockage de longueur additionnelle de l'organe de traction flexible.

Avantageusement, ce moyen de stockage est constitué par système de mouflage, comprenant un axe de renvoi intégré dans le chariot mobile et par un axe de renvoi solidaire du flasque central, et positionné sensiblement en périphérie dudit flasque.

Ce faisant, on dispose ainsi d'une longueur suffisante dudit organe de traction flexible pour s'adapter à différentes dimensions de puits de jante.

### DESCRIPTION SOMMAIRE DES FIGURES

La manière de réaliser l'invention, et les avantages qui en découlent, ressortiront mieux de la description du mode de réalisation qui suit, donné à titre indicatif, et non limitatif, à l'appui des figures annexées, dans lesquelles :
- la figure 1 est une représentation schématique en perspective d'un dispositif antidérapant conforme à l'invention mis en place sur un pneumatique de véhicule automobile ;
- la figure 2 est une vue analogue à la figure 1, en l'absence du pneumatique ;
- la figure 3 est une vue de détail du flasque central du dispositif de l'invention ;
- les figures 4 et 5 sont des vues schématiques, respectivement entière et partiellement éclatée du flasque central muni de son levier de mise sous tension en position de serrage ;
- la figure 6 est une représentation schématique en section d'une partie de l'organe fixe destiné à être solidarisé à la jante ;
- les figures 7, 8 et 9 sont des représentations schématiques partiellement éclatées illustrant les différents mouvements du levier de mise sous tension de la position serrée à la position desserrée ;
- la figure 10 est une représentation schématique en perspective de la face interne du flasque central illustrant les moyens de réglage de la longueur utile de l'organe de traction flexible ;
- la figure 11 est une représentation schématique de détail du système de mouflage mis en oeuvre pour stocker de la longueur de l'organe de traction flexible.

### MODE DE REALISATION DE L'INVENTION

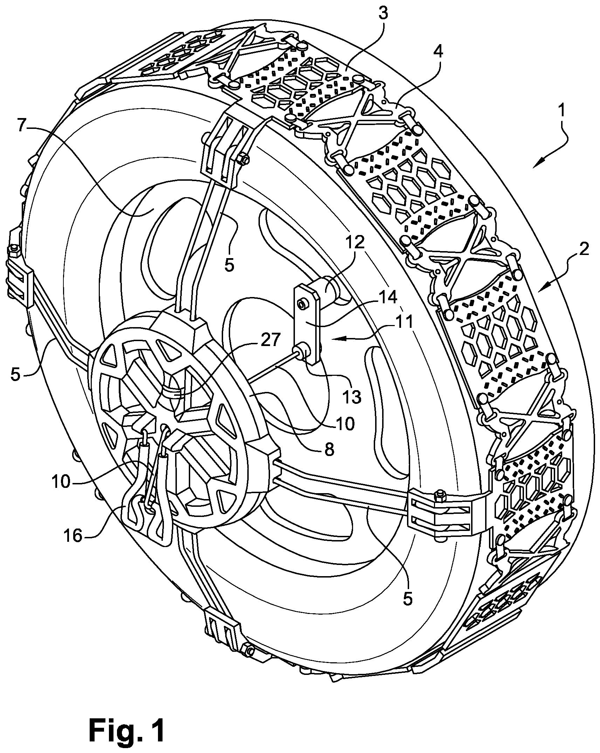

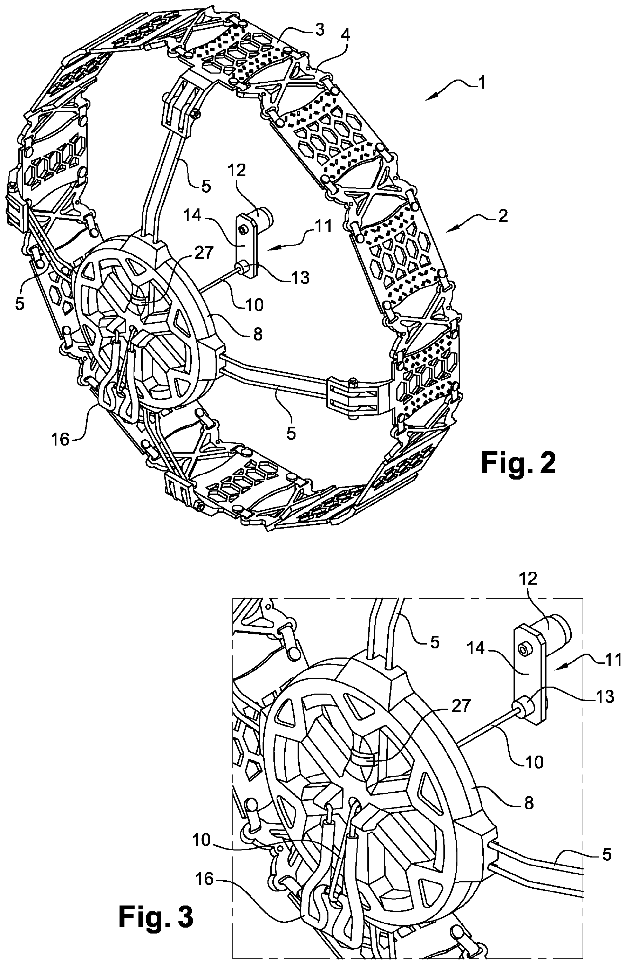

On a donc représenté en relation avec les figures 1 et 2 le dispositif antidérapant **1** de l'invention, respectivement monté sur pneumatique et en l'absence dudit pneumatique. Ce dispositif antidérapant **1** comporte un flasque central **8** à partir duquel s'étendent des bras radiaux **5,** en l'espèce quatre dans l'exemple décrit.

Le dispositif comprend en outre des moyens mécaniques assurant la fixation du flasque central **8,** et plus particulièrement le plaquage des bras radiaux **5** contre le flanc externe du pneumatique. Ces moyens mécaniques seront décrits plus en détail ultérieurement.

L'effort axial transmis au flasque central **8,** du fait de la mise en oeuvre de ces moyens mécaniques, permet donc de générer une force de plaquage aux bras radiaux **5** et corollairement, de maintenir à la bonne position le chemin de roulement **2** sur la bande de roulement du pneumatique de la roue du véhicule **7.**

Dans l'exemple décrit, le chemin de roulement **2** est constitué d'une pluralité d'éléments **3** antidérapants, et par exemple des patins en polyuréthane, joints entre eux au moyen d'éléments de jonction **4.** Cependant, cette bande de roulement pourrait être également constituée d'une bande métallique, textile ou autre....

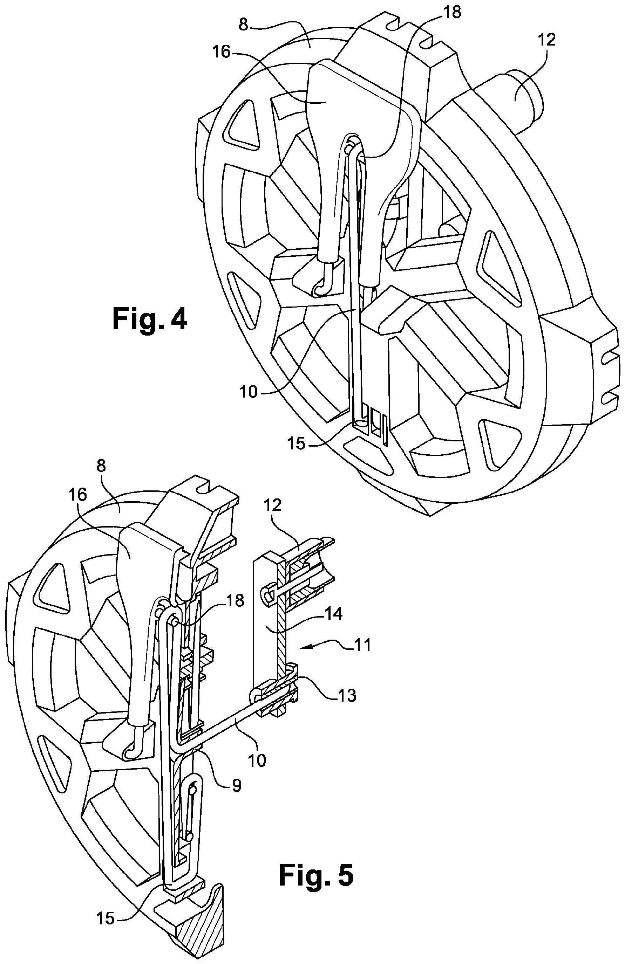

Les moyens mécaniques de fixation du flasque central **8** sur la roue du véhicule sont décrits plus en détail en relation avec les figures 3 à 6.

Ainsi donc, tout d'abord, le flasque central **8** est typiquement réalisé en matière plastique, et notamment en polyacétal ou polyamide. Il pourrait cependant être réalisé en métal. Il est de forme globalement circulaire et comporte en son centre un canal traversant **9** autorisant le passage d'un organe de traction flexible **10** de la face interne du flasque central, c'est-à-dire dirigée en direction de la roue, vers la face externe, opposée à la face interne.

Cet organe de traction flexible **10** est par exemple constitué d'un cordon. Par flexible, on entend, au sens de l'invention, le fait qu'il est susceptibles d'être plié. En revanche, il n'est pas élastique, c'est-à-dire qu'il présente des capacités d'allongement tout particulièrement réduites.

Ce cordon **10** est solidarisé au niveau de l'une de ses extrémités à un organe de fixation **11** du dispositif antidérapant sur la jante de la roue considérée, et plus précisément sur l'un des écrous de fixation de la roue sur ladite jante. Cet organe de fixation **11** comporte fondamentalement un système de pinces **12** sur ledit écrou, de type sensiblement universel, et permettant de s'adapter à tout type de dimensions desdits écrous, et d'un moyen de fixation **13** de ladite extrémité du cordon **10.**

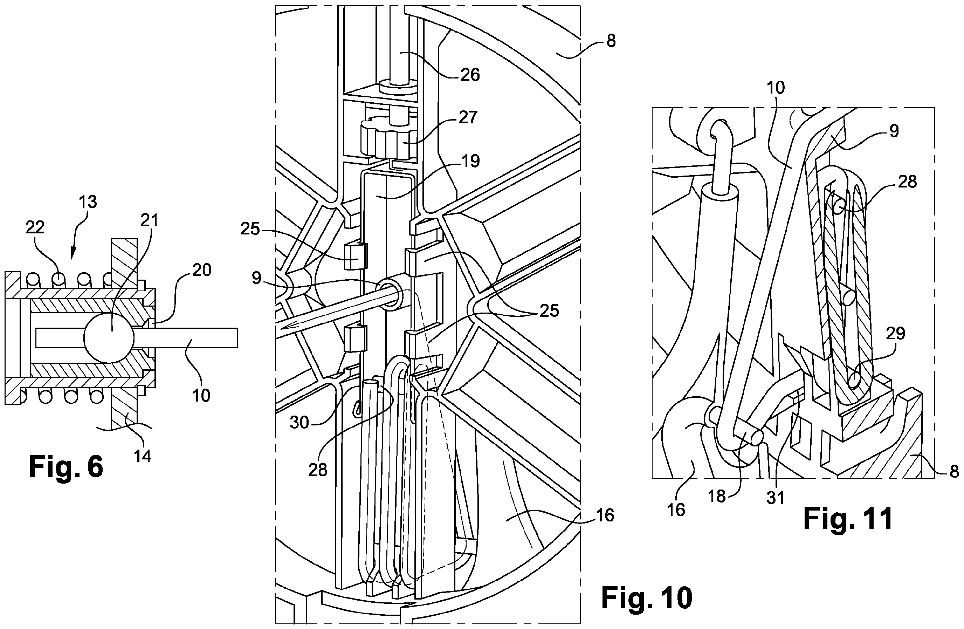

Cet organe **13** est représenté plus en détail au sein de la figure 6. Il comporte notamment un orifice traversant **20** permettant le passage du cordon **10,** celui-ci étant muni d'un simple noeud **21** ou d'une pièce rapportée, apte à interdire son retrait hors de cet orifice traversant.

Avantageusement, l'organe **13** comporte un moyen de tension du cordon **10** après mise en place du dispositif antidérapant sur la roue concernée, afin d'autoriser un léger débattement du flasque central **8** et sécuriser le positionnement correct dudit flasque après mise en tension par le cordon **10.** Typiquement, cette tension additionnelle est obtenue par la mise en oeuvre d'un ressort à boudins **22,** prenant appui notamment contre une patte **14,** dont la fonction va être décrite ci-après, et au travers de laquelle est susceptible de coulisser l'organe **13.** Ce ressort présente une constante de raideur relativement élevée, afin de n'autoriser qu'un déplacement limité de ladite extrémité du cordon **10.**

Les organes **12** et **13** sont solidarisés entre eux au moyen de la patte **14** précitée. Celle-ci est destinée à assurer le centrage de l'organe **13** par rapport à l'axe de rotation de la roue, et corollairement du cordon **10** et donc du dispositif antidérapant de l'invention, étant rappelé que la solidarisation du moyen **11** est réalisée au niveau de l'un des écrous de fixation de la roue sur la jante, excentré traditionnellement par rapport à l'axe de rotation de la roue.

L'autre extrémité du cordon **10** est fixé sur le flasque central **8.** Plus précisément, ledit cordon **10** traverse le flasque central **8** au niveau d'un canal central **9** ménagé au centre dudit flasque, et vient se fixer en **15** au niveau de la périphérie du flasque.

Dans l'intervalle, ledit cordon **10** coopère avec un levier de mise en tension **16,** articulé de fait sensiblement en zone centrale du flasque **8.** Ainsi, l'organe de traction flexible **10** coopère avec un levier de mise sous tension **16** au niveau d'un axe de renvoi **18,** positionné sensiblement au voisinage de l'extrémité libre dudit levier de mise sous tension **16.**

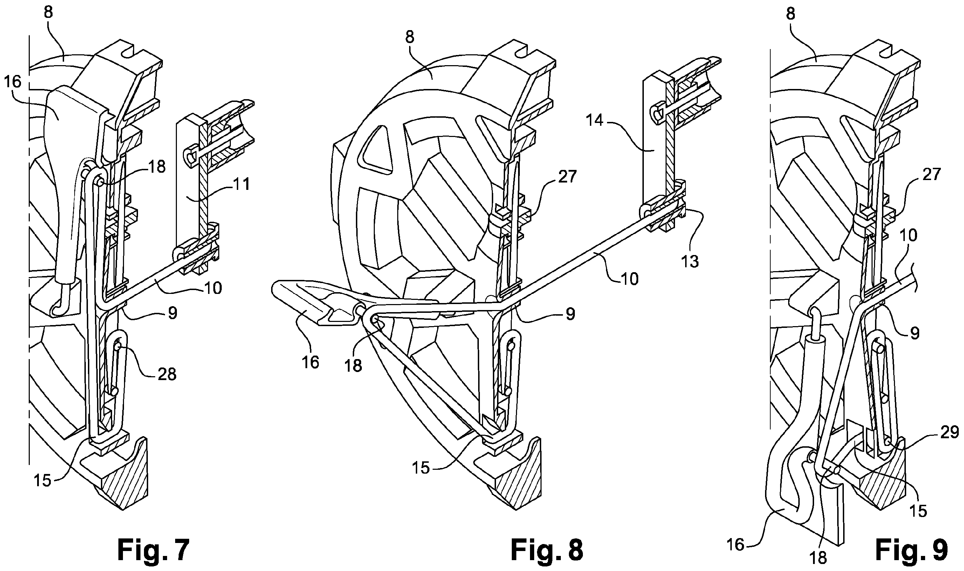

On a ainsi représenté en relation avec les figures 7, 8 et 9 les différentes positions du levier de mise sous tension **16,** de la position serrée (figure 7) à la position desserrée (figure 9). Ainsi donc, lorsque le levier de mise sous tension **16** est en position desserrée (figure 9), on dispose de davantage de longueur de cordon **10,** autorisant l'adaptation et la mise en place du dispositif antidérapant de l'invention sur la roue du véhicule considéré, nonobstant fixation de l'organe **11** sur ladite roue.

On conçoit de fait que la seule difficulté à surmonter réside dans le réglage de la longueur dudit cordon **10,** compte-tenu du différentiel de longueur de traction résultant de la course du levier **16** et du positionnement de l'axe de renvoi **18** dont il est muni.

Cette difficulté est résolue avantageusement au moyen d'un système de réglage de la longueur utile du cordon **10,** davantage décrit en relation avec les figures 10 et 11.

Plus particulièrement, le flasque central **8** intègre un chariot de réglage **19** de ladite longueur de cordon **10.** Ce chariot **19** est susceptible de se translater selon une direction de l'un des diamètres dudit flasque. A cet effet, le chariot **19** est monté sur des glissières **25,** ménagées au niveau de la face interne du flasque.

Ce chariot **19** intègre une tige filetée **26,** colinéaire avec la dimension principale du chariot, ladite tige filetée coopérant avec un écrou ou molette de réglage **27,** reçue dans un logement prévu à cet effet lui interdisant tout déplacement en translation.

Ce logement est traversant au sein dudit flasque, de sorte que l'écrou ou la molette de réglage **27** est accessible par l'utilisateur au niveau de la face externe du flasque, ainsi qu'on peut l'observer notamment sur la figure 3.

L'actionnement de la molette de réglage **27** par l'utilisateur engendre la translation de la tige filetée **26,** et corollairement celle du chariot **19,** sur lequel est fixée l'autre extrémité du cordon **10** en **30.**

Selon une caractéristique avantageuse de l'invention, le disposition antidérapant intègre des moyens de stockage de longueur dudit cordon **10.**

En l'espèce, ces moyens sont constitués par un système de mouflage, plus particulièrement décrit en relation avec les figures 10 et 11.

L'extrémité du chariot **19,** opposée à la zone de solidarisation de la tige filetée 26, est muni d'un axe de renvoi **28** du cordon **10.** Par ailleurs, le flasque **8** comporte lui-même un axe de renvoi **29** au voisinage de sa périphérie. Il devient donc possible de disposer de plusieurs boucles du cordon **10,** mouflées entre les deux axes de renvoi **28, 29,** et ainsi de disposer d'une réserve de longueur dudit cordon **10** afin de permettre l'adaptation du dispositif antidérapant de l'invention à toute dimension de roue, quelle que soit la profondeur du puits de jante.

Après renvoi, respectivement autour de l'axe de renvoi **29** intégré à la périphérie du flasque et l'axe de renvoi **28** intégré dans le chariot **19,** le cordon **10** ressort du côté de la face externe du flasque central, au moyen d'un canal **31** débouchant en **15** à la périphérie du flasque pour être à son tour renvoyé sur l'axe de renvoi **18** intégré dans le levier de mise sous tension **16.**

On a symboliquement représenté sur la figure 10 par une flèche le trajet du cordon **10** au sein de ce moyen de stockage

Ainsi donc et lors de la première utilisation, il suffit à l'utilisateur d'actionner la molette de réglage **27** après avoir positionné le levier conformément à la figure 8 pour faire se translater, dans un sens ou dans l'autre, le chariot de réglage **19,** et corollairement de disposer de la longueur utile de cordon **10,** et ainsi s'adapter aux différentes profondeurs du puits de jante. Ainsi donc, le réglage de la molette quand le levier de mise sous tension est en position intermédiaire permet de s'assurer que la tension appliquée aux bras radiaux par le flasque central en position verrouillée (figure 7) est correcte.

On conçoit de fait tout l'intérêt de ce système de fixation et de réglage, tout à la fois simple à mettre en oeuvre et efficace en termes de positionnement du flasque central, et corollairement, du plaquage des bras radiaux contre le flanc externe du pneumatique considéré, assurant un maintien efficace du chemin de roulement sur la bande de roulement dudit pneumatique.

## Revendications

1. Dispositif antidérapant (1) pour roue de véhicule automobile comprenant :
- un chemin de roulement (2) comportant une pluralité de moyens (3) développant des propriétés antidérapantes reliés entre eux par des éléments de jonction (4) ;
- des bras radiaux (5) permettant de maintenir ledit chemin de roulement (2) sur la bande de roulement d'un pneumatique d'une roue de véhicule ;
- un flasque central (8) avec lequel coopèrent lesdits bras radiaux (5), comprenant une face interne, dirigée en direction de la jante, et une face opposée à ladite face interne, dite face externe ;
- des moyens mécaniques aptes à transmettre une force de plaquage auxdits bras radiaux (5), lesdits moyens mécaniques comportant un organe fixe (11) solidaire de la jante sur laquelle est fixée la roue considérée, et un organe de traction flexible (10) permettant de déplacer axialement ledit flasque central (8) par rapport à la jante de la roue, le déplacement axial dudit flasque central permettant de générer une force de plaquage des bras radiaux (5) sur le flanc externe du pneumatique, ledit organe de traction flexible (10) étant solidarisé au niveau de l'une de ses extrémités à l'organe fixe (11), et à son autre extrémité au flasque central (8), et étant actionné au moyen d'un levier de mise sous tension (16), articulé sur la face externe du flasque central, ledit organe de traction flexible (10) traversant le flasque central de sa face interne à sa face externe au niveau d'un canal (9) ménagé au centre du flasque (8) ;
***caractérisé :***
- **en ce que** la longueur utile de l'organe de traction flexible (10) séparant l'organe fixe (11) et son point de fixation au flasque central (8) est constante, que le dispositif antidérapant soit mis en place ou non sur la roue considérée ;
- et **en ce que** le levier de mise sous tension (16) est muni d'un renvoi (18) autour duquel passe l'organe de traction flexible (10) après traversée du flasque par ledit canal (9).

2. Dispositif antidérapant selon la revendication 1, ***caractérisé* en ce qu'**il comprend en outre des moyens de réglage (19, 26, 27) de la longueur utile de l'organe de traction flexible (10) intégrés au sein du flasque central, la fixation dudit organe de traction flexible (10) au flasque (8) intervenant au niveau de ces moyens de réglage.

3. Dispositif antidérapant selon la revendication 2, ***caractérisé* en ce que** les moyens de réglage de la longueur utile de l'organe de traction flexible (10) sont constitués :
• d'un chariot (19) mobile en translation et reçu dans des glissières intégrées au sein du flasque central, l'extrémité de l'organe de traction flexible (10) opposée à celle solidarisée à l'organe fixe (10) solidaire de la jante étant fixée sur ledit chariot ;
• d'une molette ou écrou (27) faisant saillie sur la face externe du flasque central, coopérant avec une tige filetée (26) solidaire dudit chariot.

4. Dispositif antidérapant selon la revendication 3, ***caractérisé* en ce qu'**il intègre un moyen de stockage de longueur additionnelle de l'organe de traction flexible (10).

5. Dispositif antidérapant selon la revendication 4, ***caractérisé* en ce que** le moyen de stockage est constitué par un système de mouflage, comprenant un axe de renvoi (28) intégré dans le chariot mobile (19) et par un axe de renvoi (29) solidaire du flasque central, et positionné sensiblement en périphérie dudit flasque.

## Patentansprüche

1. Antirutschvorrichtung (1) für Kraftfahrzeugräder, bestehend aus:
- einer Führungsfläche (2) mit mehreren Vorrichtungen (3), die durch Verbindungselemente (4) untereinander verbundene Antirutsch-Eigenschaften entwickeln,
- radiale Arme (5), mit denen die Führungsfläche (2) auf der Lauffläche des Reifens eines Kraftfahrzeugrads gehalten werden kann;
- ein zentraler Flansch (8), mit dem diese radialen Arme (5) zusammenarbeiten, mit einer Innenseite, die in Richtung Felge zeigt, und einer dieser Innenseite gegenüberliegenden Seite, die sogenannte Außenseite;
- mechanische Mittel, die in der Lage sind, eine Anpresskraft auf diese radialen Arme (5) zu übertragen, wobei diese mechanischen Mittel ein festes Element (11), das fest mit der Felge, auf der das Rad befestigt ist, verbunden ist, und ein flexibles Zugelement (10) umfassen, mit dem dieser zentrale Flansch (8) bezogen auf die Radfelge axial verschoben werden kann, wobei die Verschiebung dieses zentralen Flansches es ermöglicht, eine Anpresskraft zu erzeugen, die die radialen Arme (5) gegen eine Außenseite des Reifens drückt, wobei dieses flexible Zugelement (10) an einem seiner Enden an dem festen Element (11) und am anderen Ende am zentrale Flansch (8) befestigt ist und mittels eines Spannhebels (16) betätigt wird, der an der Außenfläche des zentralen Flansches mit Gelenken befestigt ist, wobei dieses flexible Zugelement (10) durch den zentralen Flansch hindurch von der Innenseite zur Außenseite, durch einen Kanal (9) führt, der im Zentrum des Flanschs (8) ausgespart ist;
**dadurch gekennzeichnet:**
- **dass** die nutzbare Länge des flexible Zugelementes (10), die das feste Element (11) und seinen Befestigungspunkt am zentralen Flansch (8) trennt, konstant ist, gleichgültig, ob die Antirutschvorrichtung am jeweiligen Rad montiert ist oder nicht;
- und **dass** der Spannhebel (16) mit einer Rückführung (18) ausgestattet ist, um die das flexible Zugelement (10) herumführt, nachdem es in dem Kanal (9) durch den Flansch geführt wurde.

2. Antirutschvorrichtung gemäß Anspruch 1, **dadurch gekennzeichnet, dass** sie außerdem Einstellvorrichtungen (19, 26, 27) für die nutzbare Länge des flexiblen Zugelementes (10) enthält, die im zentralen Flansch integriert sind, wobei die Befestigung dieses flexiblen Zugelementes (10) am Flansch (8) auf Ebene dieser Einstellvorrichtungen erfolgt.

3. Antirutschvorrichtung gemäß Anspruch 2, **dadurch gekennzeichnet, dass** die Einstellvorrichtungen für die nutzbare Länge des flexiblen Zugelementes (10) bestehen aus:
- einem Schlitten (19), der in Längsrichtung verschiebbar ist, in Führungsschienen, die im Zentralflansch integriert sind, wobei das Endstück des flexiblen Zugelementes (10), das dem gegenüber liegt, das mit dem fest mit der Felge verbundenen festen Element (10) verbunden ist, an diesem Schlitten befestigt ist,
- ein Rad oder eine Mutter (27), die über die Außenseite des zentralen Flanschs herausragt, wobei mit einer mit diesem Schlitten fest verbundenen Gewindestange (26) kooperiert.

4. Antirutschvorrichtung gemäß Anspruch 3, **dadurch gekennzeichnet, dass** sie eine Vorrichtung zur Lagerung der zusätzlichen Länge des flexiblen Zugelementes (10) enthält.

5. Antirutschvorrichtung gemäß Anspruch 4, **dadurch gekennzeichnet, dass** diese Lagervorrichtung aus einem Seilzug besteht, der eine im mobilen Schlitten (19) integrierte Umlenkachse (28) sowie eine Umlenkachse (29), die mit dem Zentralflansch festverbunden ist, umfasst und im Wesentlichen an der Peripherie dieses Flanschs angebracht ist.

## Claims

1. An anti-skid device (1) for a motor vehicle wheel comprising:
- a raceway (2) comprising a plurality of means (3) developing anti-skid properties interconnected by junction elements (4);
- radial arms (5) enabling to maintain said raceway (2) on the tread of a vehicle wheel tire;
- a central flange (8) having said radial arms (5) cooperating therewith, comprising an internal surface, directed towards the rim, and a surface opposite to said internal surface, called external surface;
- mechanical means capable of transmitting a pressing force to said radial arms (5), said mechanical means comprising a fixed member (11) attached to the rim having the considered wheel secured thereto, and a flexible traction member (10) enabling to axially displace said central flange (8) with respect to the vehicle rim, the axial displacement of said central flange enabling to generate a force for pressing the radial arms (5) on the external side of the tire, said flexible traction member (10) being attached at one of its ends to the fixed member (11), and at its other end to the central flange (8), and being actuated by means of a tensioning lever (16), hinged to the external surface of the central flange, said flexible traction member (10) crossing the central flange from its internal surface to its external surface at the level of a channel (9) formed at the center of said flange (8) ;
***characterized:***
- **in that** the useful length of the flexible traction member (10) extending between the fixed member (11) and the securing point of said flexible traction member to the central flange (8) is constant, whether or not the anti-skid device mounted on the considered wheel;
- and **in that** the tensioning lever (16) is provided with a guide (18) having the flexible traction member (10) passing around it after the crossing of the flange by said channel (9).

2. The anti-skid device of claim 1, ***characterized* in that** it further comprises means (19, 26, 27) for adjusting the useful length of the flexible traction member (10) integrated within the central flange, said flexible traction member (10) being secured to the flange (8) at the level of these adjustment means.

3. The anti-skid device of claim 2, ***characterized* in that** the means for adjusting the useful length of the flexible traction member (10) are made of:
• a translation carriage (19) received in slide rails integrated within the central flange, the end of the flexible traction member (10) opposite to that attached to the fixed member (10) attached to the rim being secured to said carriage;
• a wheel or nut (27) protruding from the external surface of the central flange, cooperating with a threaded rod (26) attached to said carriage.

4. The anti-skid device of claim 3, ***characterized* in that** it integrates means for storing an additional length of the flexible traction member (10).

5. The anti-skid device of claim 4, ***characterized* in that** the storage means is formed by a reeving system, comprising a guide shaft (28) integrated in the mobile carriage (19) and by a guide shaft (29) attached to the central flange, and substantially positioned at the periphery of said flange.
